# FASCICULE DE BREVET EUROPEEN

(11) **EP 0 767 143 B1**
(45) Date de publication et mention de la délivrance du brevet: **24.11.2004**
(21) Numéro de dépôt: 96401912.9
(22) Date de dépôt: 06.09.1996
(51) Int. Cl.: E01F 1/00, B01D 21/01, B01D 21/04, B01D 21/24, C02F 1/52, B01D 21/00

(54) **Procédé et installation de dessablage et de décantation physico-chimique d'effluents urbains ou industriels**
Verfahren und Anlage zur Sandentfernung und zur physikalisch-chemischen Klärung von städtischen und industriellen Abwässern
Process and installation for sand removal and physiochemical clarification of municipal and industrial wastes

(30) Priorité: 21.09.1995 FR 9511100
(43) Date de publication de la demande: 09.04.1997
(73) Titulaire: OTV SA, 94410 Saint-Maurice (FR)
(72) Inventeur: Binot, Patrick, 77600 Bussy Saint Martin (FR); Ursel, Valéry, 94410 Saint-Maurice (FR); Badard, Michel, 92140 Clamart (FR)
(74) Mandataire: Santarelli

(56) Documents cités:
- EP-A- 0 330 582
- EP-A- 0 680 933

## Description

L'objet de l'invention est de permettre la réalisation dans un même ouvrage, compact, de la fonction de dessablage, éventuellement complété par un dégraissage, d'un effluent urbain ou industriel, à débit moyen, par exemple par temps sec ou de petite pluie, et d'une fonction complémentaire de décantation physico-chimique lestée pour des forts débits, tels que les débits de temps de pluie.

Jusqu'à une époque récente, les ouvrages d'assainissement étaient dimensionnés de manière à traiter, sur les réseaux unitaires recevant les eaux usées et les eaux de ruissellement pluviales, des débits jusqu'à un maximum d'environ 2 à 2,5 fois le débit moyen de ces réseaux en temps sec. Les excès de débit (ou surdébits) de temps de pluie étaient usuellement déversés sans traitement au milieu naturel, par l'intermédiaire de déversoirs situés sur le réseau ou en tête de station, en amont ou en aval du dessableur.

Il est rappelé qu'une installation de traitement d'eau comporte classiquement un étage de dégrillage, un étage de dessablage (voire de dégraissage) et un ou plusieurs étages de traitement (primaire, secondaire, voire tertiaire).

Compte tenu des quantités importantes de pollution véhiculées par les eaux unitaires de temps de pluie, il est maintenant reconnu comme nécessaire, dans des limites économiquement raisonnables, de traiter les eaux excédentaires de temps de pluie avant rejet au milieu naturel, afin de limiter la dégradation de ces milieux en conséquence des événements pluvieux.

Les procédés biologiques ayant des difficultés à accepter de fortes variations de charge polluante à traiter, les pointes de temps de pluie ne sont biologiquement traitées que jusqu'à un débit de l'ordre de 2 à 3 fois le débit moyen de temps sec.

Au delà, les excédents sont usuellement soit rejetés au milieu naturel, soit traités par l'un des moyens suivants :
- stockage des surdébits refusés durant la pluie par le réseau ou la station , puis redistribution vers la stations, pendant une durée de l'ordre de 24 heures maximum après la fin de la pluie,
- traitement de décantation simple ou mieux physico-chimique des effluents non traités biologiquement.

Le traitement physico-chimique, comme le traitement biologique, est usuellement précédé d'un pré-traitement des effluents durant lequel les effluents sont dégrillés ou tamisés pour en séparer les matières en suspension de taille relativement importante (supérieure à quelques millimètres), puis déssablés et dégraissés, dans des ouvrages souvent combinés, pour en séparer les sables de diamètre supérieur à 200 µmètres environ ainsi que les graisses flottables.

Les techniques nouvelles de décantation lestée, au microsable notamment, telles que décrites par les brevets français n° 88-02288 et par la demande de brevet français n° 94-05308 déposée le 2 Mai 1994 ont rendu économiquement très attrayante la décantation physico-chimique, comparée au stockage, pour le traitement des eaux de temps de pluie.

Le coût des ouvrages de traitement physico-chimique et de décantation s'ajoute néanmoins à celui des ouvrages de prétraitement classiques (dégrillage, dégraissage, dessablage ainsi qu'à celui des ouvrages de traitement classiques), et augmente de manière non négligeable le coût du traitement, et ce uniquement pour une utilisation par les temps de pluie.

II est possible que certains exploitants ou constructeurs de station aient pensé, de manière ponctuelle, à prévoir la possibilité d'une injection de réactif dans l'ouvrage de dessablage ou en amont de celui-ci, de manière pouvoir diminuer la charge de pollution carbonée arrivant après le dessableur à une unité de traitement biologique lorsque celle-ci est surchargée.

Cela n'est toutefois pas susceptible d'accroître significativement le débit traité, car les charges hydrauliques maximales dans les ouvrages de dessablage de l'ordre de 70m³/m².h en dessablage pur, et 15 à 20 m³/m².h en dégraissage dessablage combinés, ne permettent pas la décantation du floc formé, qui n'est pas suffisamment lesté par les particules diverses et le sable amené par l'eau brute pour permettre une vitesse de décantation des flocs adaptée à de tels niveaux de charge hydraulique.

L'objet de la présente invention est de rendre économiquement possible et efficace le traitement de décantation physico-chimique des excédents de temps de pluie. Elle enseigne pour ce faire que le traitement se fasse directement dans les ouvrages normalement utilisés pour le dessablage en temps sec ou de petite pluie, par utilisation de la technique de décantation lestée avec du sable recirculé.

Elle enseigne à cet effet un procédé de traitement d'un écoulement brut d'eaux usées chargées en particules et/ou en colloïdes, selon lequel l'écoulement brut est normalement introduit dans un dessableur pendant des périodes, dites de dessablage, pour y séparer un écoulement dessablé que l'on évacue par une voie de sortie vers des étages de traitement pour appliquer à cet écoulement dessablé un traitement primaire, secondaire voire tertiaire, et du sable que l'on extrait par des moyens d'extraction et que l'on évacue par une voie de sortie de sable, caractérisé en ce que, pendant d'autres périodes dites de traitement physico-chimique :
- on fait circuler cet écoulement brut dans une première zone dite zone de coagulation, dans laquelle on mélange à cet écoulement un agent coagulant dans des proportions contrôlées, cette zone de coagulation étant maintenue turbulente,
- on introduit dans cet écoulement du sable de lestage et un agent floculent en des zones d'injection successives ou non,
- on fait circuler l'écoulement coagulé dans une seconde zone dite zone intermédiaire pouvant inclure au moins l'une des zones d'injection et dans laquelle on réalise des turbulences propres à maintenir la majeure partie du sable de lestage en suspension, tandis que des colloïdes ou particules s'agrègent autour de ce sable,
- on fait circuler l'écoulement, avec sensiblement tout le sable et les colloïdes ou particules y agrégés dans le dessableur, où on sépare par décantation un effluent décanté que l'on évacue par une voie de sortie et des boues constituées du sable et de ces colloïdes et particules agrégés que l'on extrait par lesdits moyens d'extraction et que l'on évacue par la voie de sortie de sable, et,
- on recueille les boues, on en sépare le sable de lestage pour le recycler dans la zone d'injection de sable et on extrait les boues et le sable en excès.

Elle propose de même une installation de traitement d'un écoulement brut d'eaux usées chargées en particules et/ou en colloïdes, comportant un dessableur ayant une voie d'arrivée, une voie de sortie d'eau dessablée connectée à des étapes de traitement primaire, secondaire voire tertiaire, des moyens d'extraction de sable et une voie de sortie de sable, caractérisée en ce qu'elle comporte une voie de traitement physico-chimique comportant :
- une première zone dite zone de coagulation située en amont du dessableur et comportant une voie d'arrivée connectée à une source d'agent coagulant, et des moyens d'agitation turbulente,
- une voie d'arrivée de sable connectée à un source de sable calibré de lestage,
- une voie d'arrivée de floculant connectée à une source de floculant,
- une seconde zone dite zone intermédiaire munie de moyens d'agitation turbulente propres à maintenir en suspension la majeure partie du sable ajouté à l'écoulement, les voies d'arrivée de sable et de floculant débouchant dans, ou en amont de cette zone intermédiaire,
- ce dessableur avec ces moyens d'extraction de sable, cette zone intermédiaire ayant une sortie communiquant avec la voie d'arrivée de ce dessableur,
- une voie de sortie d'eau traitée, éventuellement confondue avec la voie de sortie d'eau dessablée,
- une voie de recyclage de sable connectant la voie de sortie de sable à la source de sable calibré.

Le principe de l'invention réside dans la combinaison, dans ou auprès d'un ouvrage de dessablage (et éventuellement de dessablage /dégraissage combiné) de type classique, des fonctions suivantes :
**1**. - une fonction de formation de floc lesté dans une zone de préparation maturation physico-chimique en amont de la zone de dessablage.
   Cette zone comprend au minimum les moyens suivants :
   - un moyen d'injection d'un coagulant, comme le chlorure ferrique ou le sulfate d'aluminium, qui peut être injecté en amont de l'ouvrage , par exemple en amont d'un coude du réseau ou en amont du dégrillage, et un moyen mécanique ou géométrique de mélange et de génération de turbulences.
   - un moyen d'injection et un moyen de mélange d'un floculant, tel un polyélectrolyte organique, qui est injecté en amont de la zone de dessablage, et en aval de l'injection du coagulant.
   - un moyen d'injection et un moyen de mélange d'un "microsable", c'est-à-dire d'un sable fin de taille typiquement inférieure à 350 µm environ, assurant le lestage du floc formé par les moyens précédents.
   - le point d'injection du microsable peut être situé à n'importe quel endroit en amont de la zone de dessablage proprement dite, éventuellement dans une cuve d'injection spécifique en amont de, ou dans, une zone de maturation des flocs.
   - cette zone de maturation, dans laquelle des turbulences sont générées en sorte de permettre la formation et la maturation des flocs lestés et leur maintien en suspension (ou une pré-décantation des éléments les plus pondéreux) avant envoi dans la zone de dessablage.

   L'agitation de la zone de maturation (en une ou plusieurs cuves), qui peut être réalisée par des moyens mécaniques (agitateurs) ou par une injection d'air, est typiquement maintenue à un gradient de vitesse compris entre 70 et 300 s⁻¹ (de préférence entre 150 et 250 s⁻¹). La (ou les) cuve (s) est munie à sa partie inférieure de moyens d'évacuation des dépôts éventuels, si cela est jugé nécessaire en fonction des caractéristiques de l'effluent à traiter et des conditions d'utilisation.
   Ces moyens peuvent être constitués d'une simple évacuation par pompage ou par utilisation d'un système de pompe à air ("air lift" utilisant un effet d'aspiration par bullage).
   Le moyen d'évacuation peut être combiné avec un moyen de tri assurant la fonction de maintien de la masse de sable servant à lester le floc dans les limites de diamètre optimum (taille typiquement calibrée entre 80 et 350 µmètres environ, préférentiellement entre 150 et 250 µmètres).
   La cuve de maturation des flocs est préférentiellement munie d'une chicane d'entrée, évitant les courts circuits hydrauliques, dans laquelle pourra être injecté le sable de lestage du floc, et le polymère en tout ou partie.
   La cuve de maturation des flocs peut être complétée en amont par une ou plusieurs cuves dans laquelle seraient injectés et mélangés, par exemple, le coagulant, le sable lestant le floc, et / ou le polymère.
**2**. - Une fonction de séparation des flocs lestés : cette fonction est assurée par décantation naturelle des flocs dans la zone normalement prévue pour le dessablage : durant les périodes d'utilisation de la décantation physico-chimique, les moyens d'aération usuellement prévus dans le dessableur (dessableur/ dégraisseur) pour maintenir en suspension les matières organiques (dessablage) et pour flotter les graisses (dégraissage) sont arrêtés, par exemple sur consigne en cas de dépassement d'un seuil de débit prédéterminé, et le floc lesté peut décanter dans les zones de dessablage et/ou dégraissage à des vitesses ascensionnelles pouvant atteindre 130 m/ h et plus.
   L'enlèvement des flocs lestés décantés est assuré par les moyens classiques propres au dessableur, par exemple pompe mécanique ou à air ("air lift") en trémie ou embarqués sur un pont parcourant la longueur du bassin de dessablage ou même par raclage du fond jusqu'à une trémie de récupération.
   L'ensemble des matières décantées (lest de microsable, matières organiques, sable et dépôts pondéreux issus du réseau) ainsi enlevé est amené, avec ou sans tri préalable (par exemple par hydrocyclonage ou tamisage ou flottation), par des méthodes de transport connues de l'homme de l'art (en goulottes dans un courant d'eau, en tuyauterie...) jusqu'à des moyens assurant la troisième fonction ci-après.
**3**. - Une fonction de tri des matériaux décantés (matières organiques, des sables grossiers et des sables de lest à recycler) et de recyclage du sable assurant le lestage du floc.
   Cette fonction, assurant le recyclage du matériau de lestage des flocs, est en pratique nécessaire au maintien d'une concentration suffisante de matériau de lestage dans la cuve de floculation/maturation pour permettre un lestage des flocs propres à assurer leur décantabilité à de fortes vitesses au miroir (supérieures à 30 m/h, et jusqu'à 130 m/h et plus) dans la zone de dessablage.
   Cette fonction peut être assurée par n'importe quel moyen connu de l'homme de l'art permettant de séparer, en une ou plusieurs étapes, les phases suivantes :
   - le sable de lestage (sable de diamètre typique 80 à 350 µmètres, préférentiellement 150 à 250 µmètres).
   - le sable grossier amené par le réseau et de dimensions supérieures à 250 à 300 µmètres environ, à évacuer vers des organes récepteurs ad hoc.
   - les matières organiques floculées (boues), qui sont :
      - soit retournées au réseau principal ou à un réseau séparé pour traitement à la station,
      - soit envoyées à une unité de stockage/traitement de boues.
   - éventuellement, les matières organiques grossières (feuilles, filasses) pour évacuation par exemple vers les produits de dégrillage.

De manière préférée, cette fonction de tri/ recyclage est effectuée de la façon suivante.

Le mélange de matériaux décantés extrait de la zone de dessablage est prétraité, par exemple par hydrocyclonage, de manière à en séparer les boues, matières organiques et sable très fin, destinés à être évacués, et le sable qui, par temps sec est évacué à l'extérieur normalement, et par temps de pluie retraité, par exemple par hydrocyclonage, après dilution éventuelle, afin de séparer les sables grossiers, de diamètre approximativement supérieur à 250 µmètres, des sables à usage de lest, de diamètre approximativement compris entre 150 et 250 µmètres.

Les opérations de séparation, en période de traitement physico-chimique, peuvent être assurées par hydrocyclonage mais aussi par tamisage et/ou centrifugation et/ou séparation, par lit fluidisé et/ou tout autre moyen de séparation connu de l'homme de métier.

Le sable à usage de lest, stocké dans une cuve agitée, est redistribué en période de traitement physico-chimique dans la cuve d'injection, ou directement dans la cuve de maturation lorsque l'on désire faire l'économie de la cuve d'injection au prix d'une légère perte de rendement de dépollution.

Une boucle de séparation des matières organiques grossières est disposée à partir d'un point quelconque de concentration de ces matières organiques , par exemple en fond de cuve de maturation, ou sur la goulotte recevant les matières reprises au fond de la cuve de décantation et dessablage.

Cette boucle peut séparer les sables grossiers, par exemple par un tamisage moyen sur grille de 1 à 10 mm, préférentiellement 3 à 5 mm.

Des objets, caractéristiques et avantages de l'invention ressortent de la description qui suit, donnée à titre d'exemple non limitatif, en regard des dessins annexés sur lesquels :
- la figure 1 est une figure schématique en plan d'une installation conforme à l'invention, comportant une cuve servant normalement à un dessablage avant un traitement complet,
- la figure 2 en est une vue en coupe verticale longitudinale selon la ligne II-II de la figure 1,
- la figure 3 en est une vue en coupe transversale selon la ligne III-III de la figure 1,
- la figure 4 est une vue en plan d'une autre installation conforme à l'invention,
- la figure 5 en est une vue en coupe verticale longitudinale et,
- la figure 6 en est une vue en coupe transversale selon la ligne VI-VI de la figure 4.

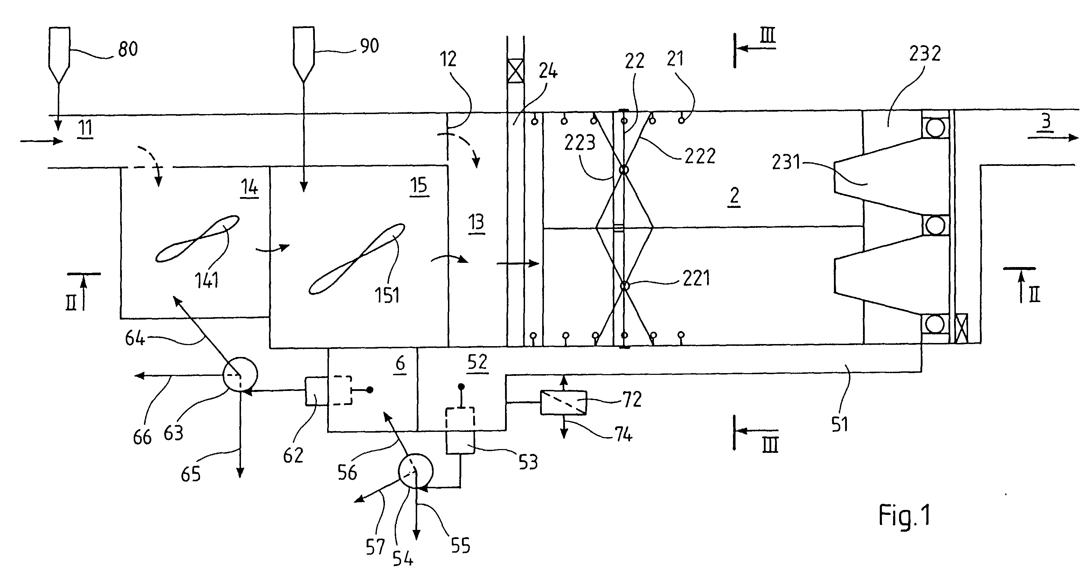

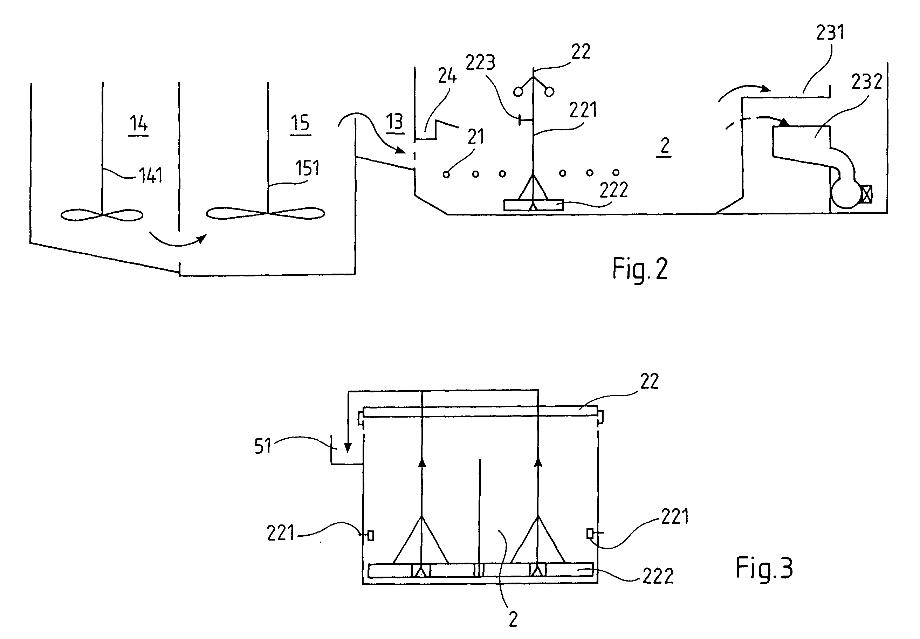

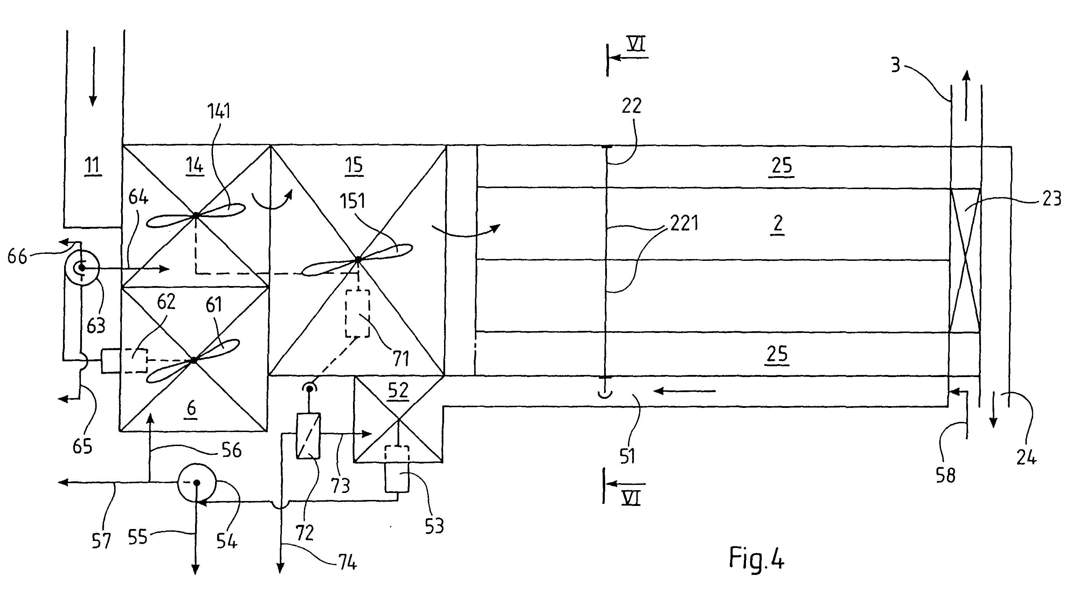

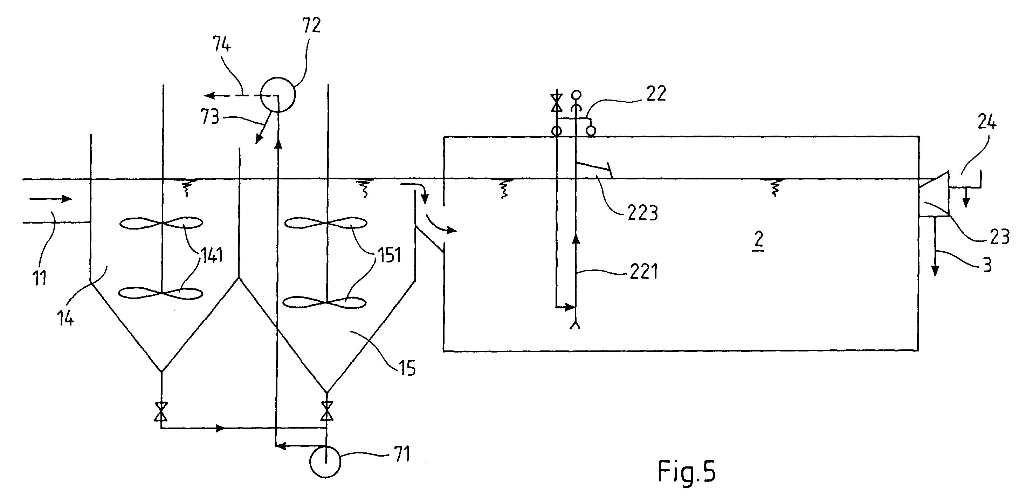

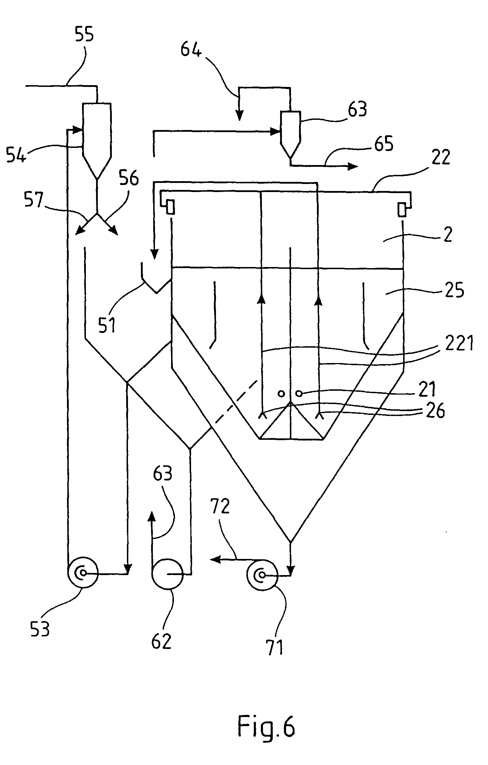

L'installation des figures 1 à 3 va d'abord être décrite en référence à un fonctionnement en période de dessablage simple (temps sec ou de petites pluies, par exemple), les figures 4 à 6 en visualisant des variantes.

L'eau brute, dégrillée préalablement, arrive par le canal 11, la vanne pelle 12 en configuration ouverte et le canal 13 dans la zone 2 de dessablage - dégraissage d'un dessableur - dégraisseur - ici représenté dans une forme rectangulaire classique.

Sous l'action d'un bullage d'air (rampes de bullage 21), les graisses sont flottées vers la surface, tandis que les matériaux en suspension sont brassés de façon turbulente afin de limiter les dépôts de matière organique dans le dessableur.

L'eau dessablée est extraite par surverse 232, et évacuée par le canal 3 vers des étages de traitement non représentés, tandis que les graisses sont évacuées par un racleur 223, lié au pont roulant 22, vers un transporteur de graisses et flottants 24.

Les matériaux décantés dans le dessableur (principalement sable et matières organiques liées ou pondéreuses), sont raclés en partie basse par le racleur 222 qui les ramène vers un moyen de relevage par pompe à air - air lift (ou une pompe mécanique) 221, et envoyés dans la goulotte d'évacuation 51, munie d'une pente suffisante pour l'évacuation du mélange à la bâche de reprise 52.

Il est à noter que le fond du dessableur peut être également prévu à fond plat avec raclage jusqu'à une ou plusieurs fosses de reprises. Il est également possible d'utiliser un dessableur à fond en couloir(s) en V 26, et reprise par pompe mécanique ou pompe à air - air lift 221 embarqué sur pont roulant, tel que représenté sur les figures 4 à 6 en variante.

De même, la goulotte d'évacuation 51 peut être munie d'un courant d'eau 58 et/ou d'un bullage d'air de fond évitant les dépôts des matériaux en transit.

La bâche de reprise 52 peut également être munie d'un système d'agitation mécanique ou par injection d'air, permettant le maintien en suspension des matériaux et une pré-séparation des gangues de matière organique liées aux matières minérales.

Les matières organiques sont enfin séparées du sable à l'aide de l'ensemble pompe 53 et hydrocyclone 54, qui peuvent être complétés ou remplacés par tout autre mode usuel de séparation du sable et des matières organiques, tel que des vis d'Archimède ou classificateurs à râteaux alternatifs par exemple.

Le sable est alors évacué, par exemple vers une benne, les matières organiques sont également évacuées, éventuellement après tamisage et pressage, par exemple vers les résidus de dégrillage.

En période de traitement physico-chimique (temps de forte pluie, par exemple), le fonctionnement est modifié comme suit.

L'eau brute dégrillée est additionnée d'un coagulant par une voie 80 débouchant en amont de l'installation décrite, soit par injection de coagulant (sel de métal trivalent par exemple) en amont d'une discontinuité hydraulique assurant le mélange (le dégrilleur par exemple), soit par injection dans une cuve de coagulation (non représentée) positionnée à l'amont de l'installation. Des turbulences sont générées pour favoriser la coagulation, soit par des moyens mécaniques (classiques) tels que des agitateurs (non représentés), soit par des discontinuités hydrauliques (coude ou autre), soit par tout autre moyen connu approprié. La vanne pelle 12 est fermée et l'eau coagulée passe alors, par exemple par surverse en profitant de ce qu'en pratique le niveau de l'écoulement incident a augmenté en raison des pluies, dans la cuve d'injection agitée 14 où elle est intimement mélangée avec un matériau granuleux apte à lester efficacement le floc en formation.

Le matériau granuleux est de préférence du sable, dont le diamètre, calibré, sera maintenu entre, approximativement, 80 et 350 micromètres, préférentiellement en dessous de 250 micromètres, par alimentation à partir des moyens de recyclage décrits plus loin.

L'eau coagulée séjourne dans la cuve d'injection 14 pendant une durée de l'ordre de 30 secondes à 1 minute en débit de pointe, avec un gradient de vitesse typiquement compris entre 100 s⁻¹ et 400 s⁻¹ environ, de préférence de l'ordre de 200 s⁻¹ environ.

L'eau coagulée mélangée au sable, issue de la cuve d'injection 14, passe par sousverse dans la cuve de maturation 15, agitée, avec un temps de séjour de l'ordre de 1 à 2 minutes en débit de pointe, et avec un gradient de vitesse typiquement compris entre 70 et 300 s⁻¹, préférentiellement de l'ordre de 150 s⁻¹.

Un réactif floculant est ajouté à l'eau à traiter, à partir d'une source 90, soit dans la cuve d'injection 14, soit dans la cuve de maturation 15, soit en partie dans chacune de ces cuves (mais en aval de l'injection du coagulant).

Dans la cuve de maturation, les flocs se forment, grossissent et se lestent en sable. L'écoulement d'eau à traiter est alors envoyé par surverse dans le canal 13, puis dans le dessableur 2, dans lequel les systèmes de bullage d'air 21 sont arrêtés pour permettre aux flocs de décanter dans un écoulement dont la vitesse ascensionnelle peut atteindre 130 m/ h et plus, préférentiellement 100 à 130 m/h, grâce au lestage du floc. Les flocs physico-chimiques et les sables amenés par l'effluent brut ayant décanté dans le dessableur - ici représenté à fond plat raclé avec reprise par pompe à air, mais pouvant être équipé de tout autre moyen de reprise tel que, par exemple, les fonds en couloirs en V et reprise par pompe à air ou pompe utilisés classiquement dans un dessableur - sont repris par le racleur 22, la pompe à air 221, et envoyés à la goulotte latérale 51, bâche de reprise 52, pompe à sable 53, et hydrocyclone 54 qui sépare les boues, évacuées en surverse, des sables, récupérés en sousverse et envoyés dans la cuve à sable 6.

Les sables de lestage sont séparés des sables grossiers apportés par l'eau brute, avant recyclage en cuve d'injection 14, dans l'hydrocyclone 63, alimenté par la pompe à sable 62.

Une grille ou un tamis 72 peut être prévu en un point de concentration des matières de grande taille et des filasses situé sur le circuit de recyclage, pour déconcentrer ce circuit en ces matériaux, avec une évacuation 74.

L'évacuation des eaux traitées est effectuée, dans l'installation représentée sur les figures 1 à 3, par un déversoir 231, situé à un niveau supérieur au niveau de sortie de l'eau par le déversoir 232 en période de dessablage simple, l'évacuation du déversoir 232 étant fermée en période de traitement physico-chimique afin de remonter le plan d'eau à décanter et adapter le profil hydraulique aux exigences du passage par les cuves 14 et 15 en période de traitement physico-chimique. Ces déversoirs débouchent avantageusement dans la même voie de sortie d'eau, éventuellement munie en aval d'une vanne de distribution évacuant ce que les étages de traitement normal ne peuvent pas traiter. Il est néanmoins possible que ces déversoirs soient connectés à des voies de sortie différentes, incluant par exemple une voie d'évacuation directe des eaux de temps de pluie.

Dans l'installation représentée, le sable de lest est stocké, en période de dessablage simple, dans l'une ou l'autre des cuves 6, 14 et 15, tandis que tout le sable en excès, séparé par l'hydrocyclone 54, est évacué par la sortie représentée en 57 et/ou 66.

Des dispositions classiques en soi sont prises pour maintenir le sable stocké en suspension, ou pour disposer d'un gradient de vitesse élevé lors de la remise en suspension, au début de l'épisode pluvieux (entraînement avec moteur à 2 vitesses ou variation de vitesse asservi à des temporisations).

Parmi les nombreuses variantes possibles, on peut citer à titre indicatif :
- la possibilité de munir les cuves d'injection et de maturation de trémies permettent d'en extraire les flocs qui y pré-décanteraient ainsi que les matériaux pondéreux amenés par l'eau brute, comme représenté sur les figures 4 à 6 qui représentent également la possibilité d'installer un tamis 72 sur l'extraction des cuves de coagulation et/ ou de maturation pour séparer les matériaux pondéreux grossiers et les filasses des flocs et sables envoyés dans la trémie de reprise 52,
- la possibilité de prévoir le transit de l'eau à traiter par les cuves d'injection 14 et de maturation 15 en période de dessablage simple comme en période de traitement physico-chimique, comme représenté sur les figures 4 à 6 Dans ce cas, la reprise des eaux traitées peut être également effectuée par un déversoir unique 23, et la reprise des graisses et flottants par le racleur 223 et la goulotte à graisse 24 est simplifiée par une moindre amplitude de variation du niveau dans le dessableur,
- la possibilité d'arranger différemment les moyens de séparation des boues, sable de lest et sable en excès, par exemple en utilisant l'hydrocylone (ou tout autre moyen de séparation par tamisage, centrifugation, lit fluidisé ou autre) 54 pour séparer en sousverse le sable en excès et en surverse le mélange des boues et du sable de lest à recycler, ce mélange étant ultérieurement séparé en boues à évacuer et en sable de lest recyclé, par l'hydrocyclone 63.

Il est à noter que l'installation décrite fonctionne comme un concentrateur de sable de la dimension sélectionnée pour le lestage du floc : la charge de sable de lest est entretenue par l'apport en sable de l'eau à traiter.

L'installation des figures 1 à 3 et son fonctionnement sont par exemple dimensionnés comme suit :
• débit moyen à dessabler en temps sec ou de petites pluies : 1 000 m³/h
• débit maximum accepté par la station de traitement biologique aval : 2500 m³/h
• débit maximum à traiter par décantation physico-chimique dans l'ouvrage de dessablage en temps de forte pluie : 8 000 m³/h
• dimension de l'ouvrage de dessablage décantation :

| | |
|---|---|
| Surface | 100 m² |
| Profondeur | 4 m |

Vitesse ascensionnelle de dessablage
au débit moyen de temps sec : 10 m/h
au débit maximum du traitement biologique : 25 m/h
au débit maximum de décantation physico-chimique : 80 m/h

• volume de la cuve d'injection de sable de lest : 125 m³
• volume de la cuve de maturation : 250 m³
• coagulant : FeCl₃ injecté en amont de dégrillage avant l'installation, au taux de 60 mg/litre d'eau brute.
• sable de lest : entre 100 et 250 micromètres recirculé à un taux de 3 kg de sable réinjecté par m³ d'eau brute, injection du sable en cuve d'injection.
• floculant: Polymère anionique au taux de 1 mg/litre d'eau brute, injecté dans la cuve de maturation.
• abattement de la pollution organique entre l'eau brute et l'eau traitée sortant de l'ouvrage après traitement physico-chimique.

| | |
|---|---|
| Matières en suspension | > 80 % |
| Demande chimique en oxygène | > 65 % |
| Phosphore | > 80 % |

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Procédé de traitement d'un écoulement brut d'eaux usées chargées en particules et/ou en colloïdes, selon lequel l'écoulement brut est normalement introduit dans un dessableur (2) pendant des périodes, dites de dessablage, pour y séparer un écoulement dessablé que l'on évacue par une voie de sortie (3) vers des étages de traitement pour appliquer à cet écoulement dessablé un traitement primaire, secondaire voire tertiaire, et du sable que l'on extrait par des moyens d'extraction (22) et que l'on évacue par ue voie de sortie de sable (51), **caractérisé en ce que**, pendant d'autres périodes dites de traitement physico-chimique :
- on fait circuler cet écoulement brut dans une première zone dite zone de coagulation, dans laquelle on mélange à cet écoulement un agent coagulant dans des proportions contrôlées, cette zone de coagulation étant maintenue turbulente,
- on introduit dans cet écoulement du sable de lestage et un agent floculant en des zones d'injection (14, 15) successives ou non,
- on fait circuler l'écoulement coagulé dans une seconde zone dite zone intermédiaire (14) pouvant inclure au moins l'une des zones d'injection et dans laquelle on réalise des turbulences propres à maintenir la majeure partie du sable de lestage en suspension, tandis que des colloïdes ou particules s'agrègent autour de ce sable,
- on fait circuler l'écoulement, avec sensiblement tout le sable et les colloïdes ou particules y agrégés dans le dessableur, où on sépare par décantation un effluent décanté que l'on évacue par une voie de sortie (3) et des boues constituées du sable et de ces colloïdes et particules agrégés que l'on extrait par lesdits moyens d'extraction (22) et que l'on évacue par la voie de sortie de sable (51), et,
- on recueille les boues, on en sépare (54, 63) le sable de lestage pour le recycler dans la zone d'injection de sable et on extrait les boues et le sable en excès.

2. Procédé selon la revendication 1, **caractérisé en ce que** la voie de sortie de l'eau décantée en période de traitement physico-chimique et la voie de sortie d'eau dessablée en période de dessablage sont confondues.

3. Procédé selon l'une quelconque des revendications 1 ou 2, **caractérisé en ce que** le sable de lestage recyclé a une taille moyenne de particules comprise entre 80 et 350 µm environ, de préférence entre 150 et 250 µm.

4. Procédé selon l'une quelconque des revendications 1 à 3, **caractérisé en ce que** la vitesse ascensionnelle dans la zone de décantation-dessablage, est limitée à un maximum compris entre 25 et 75 m³/h /m², pendant les périodes de dessablage et à un maximum inférieur à 200 m³/h/m² pendant les périodes de traitement physico-chimique.

5. Procédé selon l'une quelconque des revendications 1 à 4, **caractérisé en ce que** le gradient de vitesse dans la zone intermédiaire est compris entre 70 et 450 s⁻¹, de préférence entre 150 et -250-s¹.

6. Procédé selon l'une quelconque des revendications 1 à 5, **caractérisé en ce que** l'agent coagulant est injecté dans le canal d'arrivée d'eau (11) brute, en amont d'une source de turbulence assurant un mélange rapide de l'eau brute et du coagulant.

7. Procédé selon l'une quelconque des revendications 1 à 6, **caractérisé en ce que** l'écoulement d'eau brute coagulée reçoit d'abord une injection de sable de lestage dans une cuve d'injection, puis passe dans une cuve de maturation que comporte la zone intermédiaire, l'agent floculant étant injecté dans l'une et/ou dans l'autre de ces deux cuves.

8. Procédé selon l'une quelconque des revendications 1 à 6, **caractérisé en ce que** l'injection de sable de lest et l'injection de l'agent floculant sont réalisées directement dans une cuve de maturation que comporte la zone intermédiaire.

9. Procédé selon l'une quelconque des revendications 1 à 8, **caractérisé en ce qu'**en période de dessablage l'eau brute arrive directement dans la zone de dessablage sans transiter par la zone d'injection ou la zone intermédiaire.

10. Procédé selon la revendication 9, **caractérisé en ce que** l'on extrait l'eau à la sortie de la zone de décantation dessablage à deux niveaux différents (231, 232) pouvant être isolés ou activés séparément selon que l'on est en période de dessablage ou en période de traitement physico-chimique, le niveau de sortie (231) d'eau décantée en période de traitement physico-chimique étant plus élevé que celui utilisé en période de dessablage.

11. Procédé selon l'une quelconque des revendications 1 à 10, **caractérisé en ce que**, en période de traitement physico-chimique, la séparation entre les boues et matières organiques, le sable de lest recyclé et le sable en excès est assurée par hydrocyclonage et/ou tamisage et/ou centrifugation et/ou par séparation par lit fluidisé.

12. Procédé selon l'une quelconque des revendications 1 à 11, **caractérisé en ce que** l'effluent chargé de sable extrait par la voie de sortie de sable est en toute période traité par des moyens communs d'hydrocyclonage.

13. Procédé selon la revendication 12, **caractérisé en ce que**, en période de traitement physico-chimique, on extrait par sousverse d'un premier hydrocyclone (54) un effluent sableux lourd auquel on fait subir un second hydrocyclonage (63) pour séparer les sables fins qui seront recyclés comme sable de lest vers la zone d'injection, des sables grossiers amenés par l'écoulement brut à traiter.

14. Procédé selon la revendication 12, **caractérisé en ce que**, en période de traitement physico-chimique, on extrait de cet hydrocyclone (54), en sousverse les sables grossiers, et en surverse les boues et sables fins auxquels on fait subir un second hydrocyclonage pour séparer les boues organiques des sables de lest à recycler vers la zone d'injection.

15. Procédé selon l'une quelconque des revendications 1 à 14, **caractérisé en ce que**, en période de dessablage, le sable de lest est stocké dans une zone de stockage de sable munie d'un moyen d'agitation et est remis en suspension en début de période de traitement physico-chimique.

16. Procédé selon la revendication 15, **caractérisé en ce que** le sable est stocké dans la ou les zones qui sont utilisées comme zone d'injection et/ou zone intermédiaire en période de traitement physico-chimique.

17. Procédé selon l'une quelconque des revendications 1 à 16, **caractérisé en ce qu'**on applique à l'effluent sableux sortant du dessableur par la voie de sortie de sable, une séparation pour extraire des éventuelles grosses particules ou d'éventuelles filasses.

18. Installation de traitement d'un écoulement brut d'eaux usées chargées en particules et/ou en colloïdes comportant un dessableur (2) ayant une voie d'arrivée (13), une voie de sortie d'eau dessablée (3) connectée à un ou plusieurs étages de traitement primaire, secondaire voire tertiaire, des moyens d'extraction de sable (22) et une voie de sortie de sable (51), **caractérisée en ce qu'**elle comporte une voie de traitement physico-chimique comportant :
- une première zone dite zone de coagulation située en amont du dessableur et comportant une voie d'arrivée connectée à une source d'agent coagulant (80), et des moyens d'agitation turbulente,
- une voie d'arrivée de sable (64) connectée à un source de sable calibré de lestage,
- une voie d'arrivée de floculant (90) connectée à une source de floculant,
- une seconde zone dite zone intermédiaire munie de moyens d'agitation turbulente propres à maintenir en suspension la majeure partie du sable ajouté à l'écoulement, les voies d'arrivée de sable et de floculant débouchant dans, ou en amont de cette zone intermédiaire,
- ce dessableur avec ces moyens d'extraction de sable (22), cette zone intermédiaire ayant une sortie communiquant avec la voie d'arrivée de ce dessableur,
- une voie de sortie d'eau (3), éventuellement confondue avec la voie de sortie d'eau dessablée,
- une voie de recyclage de sable connectant la voie de sortie de sable à la source de sable calibré.

19. Installation selon la revendication 18, **caractérisée en ce que** le sable de lestage est recyclé a une taille moyenne de particules comprise entre 80 et 350 µm environ, de préférence entre 150 et 250 µm.

20. Installation selon la revendication 18 ou la revendication 19, **caractérisée en ce que** l'agent coagulant est injecté dans le canal d'arrivée d'eau brute, en amont d'une source de turbulence assurant un mélange rapide de l'eau brute et du coagulant.

21. Installation selon l'une quelconque des revendications 18 à 20, **caractérisée en ce que** la zone intermédiaire comporte une cuve d'injection (14) dans laquelle débouche la voie d'injection de sable, puis une cuve de maturation, la voie d'arrivée de floculant débouchant dans l'une et/ou dans l'autre de ces deux cuves.

22. Installation selon l'une quelconque des revendications 18 à 20, **caractérisée en ce que** l'injection de sable de lestage et l'injection de l'agent floculant sont réalisés directement dans une cuve de maturation (15) que comporte la zone intermédiaire.

23. Installation selon la revendication 21 ou 22, **caractérisée en ce que** les zones de coagulation et/ou injection de sable de lestage, et/ou maturation du floc, sont des cuves agitées à fond plat.

24. Installation selon la revendication 21 ou la revendication 22, **caractérisée en ce que** les zones de coagulation et/ou injection de sable de lestage, et/ou maturation du floc, sont des cuves agitées à fond en trémie avec possibilité d'y adapter des moyens de vidange et/ou de tri des matériaux y décantant, et/ou recyclage du sable de lestage.

25. Installation selon l'une quelconque des revendications 18 à 24, **caractérisée en ce qu'**elle comporte une ligne d'accès direct de l'écoulement brut (11,12) amenant l'écoulement brut sans transiter par la zone d'injection ou la zone intermédiaire, des moyens de distribution tels que, vanne, batardeau, seuil, permettant la distribution de l'écoulement brut soit vers cette ligne d'accès direct, soit vers les zones d'injection et intermédiaire.

26. Installation selon l'une quelconque des revendications 18 à 25, **caractérisée en ce que** la voie de sortie d'eau (3) est connectée à des moyens d'extraction d'eau (232, 232) situés à deux niveaux différents et pouvant être isolés ou activés séparément selon que l'on est en une période de dessablage ou en une période de traitement physico-chimique.

27. Installation selon l'une quelconque des revendications 18 à 26, **caractérisée en ce que** la zone de décantation dessablage comporte un fond en forme de couloir(s) en V, équipé de moyens de reprise des matériaux décantés par pompe(s) ou pompe(s) à air embarqué(s) sur un pont roulant.

28. Installation selon l'une quelconque des revendications 18 à 26, **caractérisée en ce que** la zone de décantation dessablage comporte un fond plat, équipé de moyens de raclage ramenant les matériaux décantés vers une zone de reprise équipée de moyens de reprise fixes et/ou embarqués sur un pont roulant, tels que pompe(s) mécanique(s) ou pompe(s) à air.

29. Installation selon l'une quelconque des revendications 18 à 28, **caractérisée en ce que** la voie de recyclage comporte des moyens d'hydrocyclonage (54, 63) et/ou tamisage et/ou centrifugation et/ou séparation par lit fluidisé.

30. Installation selon l'une quelconque des revendications 18 à 29, **caractérisée en ce que** la voie de sortie de sable est connectée à une voie d'évacuation de sable par un hydrocyclone (54).

31. Installation selon la revendication 30, **caractérisée en ce que** la sousverse de l'hydrocyclone est appliquée à un second hydrocyclone dont la surverse est connectée à la source de sable calibré.

32. Installation selon la revendication 30, **caractérisée en ce que** la surverse de l'hydrocyclone est appliquée à un second hydrocyclone dont la sousverse est connectée à la source de sable calibré.

33. Installation selon l'une quelconque des revendications 18 à 32, **caractérisée en ce que** la voie de recyclage de sable comporte une zone de stockage de sable munie d'un moyen d'agitation.

34. Installation selon la revendication 33, **caractérisée en ce que** la zone de stockage de sable est confondue avec la zone d'injection et/ou la zone intermédiaire.

35. Installation selon l'une quelconque des revendications 18 à 34, **caractérisée en ce que** la voie de traitement physico-chimique comporte un organe de séparation des matériaux de grosse dimension et/ou filasses, par exemple un tamis.

36. Procédé selon l'une quelconque des revendications 1 à 17, **caractérisé en ce que** le traitement appliqué à l'écoulement dessablé est un procédé biologique.

37. Installation selon l'une quelconque des revendications 18 à 35, **caractérisée en ce que** le ou les étage(s) de traitement au(x)quel(s) est connectée la voie de sortie d'eau dessablée est/sont adapté(s) à appliquer un traitement biologique.

## Patentansprüche

1. Verfahren zur Behandlung eines unbehandelten Abwasserstromes, welcher mit Partikeln und/oder Kolloiden versetzt ist, bei dem der unbehandelte Strom normalerweise in einen Sandabscheider (2) während sogenannter Sandabscheidungs-Phasen eingeleitet wird, um hier einen von Sand befreiten Strom, welcher durch einen Ablauf (3) über Behandlungsstufen ausgetragen wird, um den von Sand befreiten Strom einer ersten, einer zweiten und sogar dritten Behandlung zu unterziehen, sowie Sand voneinander zu trennen, welcher durch Einrichtungen (22) zum Abführen abgefördert und durch eine Sandabgabe (51) ausgetragen wird, **dadurch gekennzeichnet, dass** während weiterer sogenannter physikochemischer Behandlungsphasen:
- der unbehandelte Strom in einer ersten Zone, der sogenannten Koagulationszone, in der dem Strom in kontrolliertem Verhältnis ein Koagulanzmittel beigemengt wird, umgewälzt wird, wobei die Koagulationszone turbulent gehalten wird,
- in diesen Strom in Einleitungszonen (14, 15) Filtersand sowie ein Flockungsmittel gegebenenfalls sukzessive beigemengt wird,
- der koagulierte Strom in einer zweiten Zone, der sogenannten Zwischenzone (14), umgewälzt wird, welche mindestens eine der Einleitungszonen mit einschließt und in der turbulente Strömungen erzeugt werden, welche dazu geeignet sind, einen Großteil des Filtersandes in Suspension zu halten, während sich die Kolloide und Partikel um den Sand herum anlagern,
- der Strom mit im wesentlichen dem gesamten Sand sowie den daran angelagerten Kolloiden und Partikeln in einem Sandabscheider zirkuliert, in welchem durch Dekantieren ein dekantierter Strom, welcher durch einen Ablauf (3) abgeführt wird, und Schlamm mit Sand sowie den an diesem anhaftenden Kolloiden und Partikeln, welcher durch die Einrichtungen (22) zum Abführen und durch eine Sandabgabe (51) ausgetragen wird, voneinander getrennt werden, sowie
- die Schlämme gesammelt werden, der Filtersand abgetrennt wird (54, 63), um diesen wieder in die Sandeinleitungszone zurückzuführen, sowie die Schlämme und überschüssigen Sand abgeschieden werden.

2. Verfahren nach Anspruch 1, **dadurch gekennzeichnet, dass** der Ablauf für das dekantierte Wasser während der physiko-chemischen Behandlungsphase sowie der Ablauf für das von Sand befreite Wasser während des Entsandens ineinanderlaufen.

3. Verfahren nach einem der Ansprüche 1 oder 2, **dadurch gekennzeichnet, dass** der wiederverwendete Filtersand eine mittlere Teilchengröße im Bereich von 80 und 350 µm, vorzugsweise zwischen 150 und 250 µm, aufweist.

4. Verfahren nach einem der Ansprüche 1 bis 3, **dadurch gekennzeichnet, dass** die Anstiegsgeschwindigkeit in der Dekantier-Entsandungs-Zone während der Entsandungsphase auf ein Maximum zwischen 25 und 75 m³/h/m² und während der physiko-chemischen Behandlungsphase auf ein tief angesetztes Maximum von 200 m³/h/m² begrenzt ist.

5. Verfahren nach einem der Ansprüche 1 bis 4, **dadurch gekennzeichnet, dass** die Höchstgeschwindigkeit in der Zwischenzone zwischen 70 und 450 s⁻¹, vorzugsweise zwischen 150 und 250 s⁻¹ liegt.

6. Verfahren nach einem der Ansprüche 1 bis 5, **dadurch gekennzeichnet, dass** das Koagulanzmittel stromaufwärts einer Verwirbelungsquelle in den Abwasserzulauf (11) eingeleitet wird, wodurch eine schnelle Vermischung des Abwassers mit dem Koagulanzmittel sichergestellt wird.

7. Verfahren nach einem der Ansprüche 1 bis 6, **dadurch gekennzeichnet, dass** der zum Koagulieren gebrachte Abwasserstrom vor dem Einleiten des Filtersandes in einen Einleitungsbehälter eingeleitet und dann in einen Reifebehälter weitergeleitet wird, welcher die Zwischenzone beinhaltet, wobei das Flockungsmittel in den einen und/oder in den anderen der Behälter eingeleitet wird.

8. Verfahren nach einem der Ansprüche 1 bis 6, **dadurch gekennzeichnet, dass** das Einleiten des Filtersandes und das Einleiten des Flockungsmittels unmittelbar in einen Reifebehälter erfolgen, welcher die Zwischenzone beinhaltet.

9. Verfahren nach einem der Ansprüche 1 bis 8, **dadurch gekennzeichnet, dass** das Abwasser während des Entsandens direkt in die Entsandungszone gelangt, ohne die Einleitungszone oder die Zwischenzone zu durchlaufen.

10. Verfahren nach Anspruch 9, **dadurch gekennzeichnet, dass** das Wasser beim Verlassen der Dekantier-Entsandungs-Zone auf zwei verschiedenen Niveaus (231, 232) gewonnen wird, welche voneinander getrennt und unabhängig voneinander aktiviert werden können, jenachdem, ob man sich in der Entsandungsphase oder der physiko-chemischen Behandlungsphase befindet, wobei das Abgabeniveau (231) für das dekantierte Wasser während der physiko-chemischen Behandlungsphase höher ist als das, welches während des Entsandens verwendet wird.

11. Verfahren nach einem der Ansprüche 1 bis 10, **dadurch gekennzeichnet, dass** während der physiko-chemischen Behandlungsphase die Trennung der Schlämme und organischen Materialien, der Filtersande und überschüssigen Sande durch Hydrozyklonieren und/oder durch Sieben und/oder durch Zentrifugieren und/oder durch Fließbetttrennung sichergestellt wird.

12. Verfahren nach einem der Ansprüche 1 bis 11, **dadurch gekennzeichnet, dass** der mit Sand versetzte Abfluss, welcher durch die Sandabgabe abgeführt wird, während der gesamten Phase durch gemeinsame Mittel zum Hydrozyklonieren behandelt wird.

13. Verfahren nach Anspruch 12, **dadurch gekennzeichnet, dass** während der physiko-chemischen Behandlungsphase durch Durchlaufen eines ersten Hydrozyklotrons (54) der schwere sandige Abfluss gewonnen wird, welcher einem zweiten Hydrozyklotron (63) zugeführt wird, um den feinen Sand, welcher, wie der Filtersand, in Richtung der Einleitungszone zurückgeleitet wird, und den groben Sand, welcher vom ungereinigten Strom mitgeführt wird, voneinander zu trennen.

14. Verfahren nach Anspruch 12, **dadurch gekennzeichnet, dass** in der physiko-chemischen Behandlungsphase von dem Hydrozyklotron (54) durch Ablaufen der grobe Sand und durch Überlaufen die Schlämme und der feine Sand, welche einem zweiten Hydrozyklonierens unterzogen werden, um die organischen Schlämme von dem in die Einleitungszone zurückzuleitenden Filtersand zu trennen, gewonnen werden.

15. Verfahren nach einem der Ansprüche 1 bis 14, **dadurch gekennzeichnet, dass** der Filtersand während des Entsandens in einer Sandspeicherzone, welche mit Bewegungsmitteln ausgestattet ist, gespeichert wird und zu Beginn der physiko-chemischen Behandlungsphase in Suspension gebracht wird.

16. Verfahren nach Anspruch 15, **dadurch gekennzeichnet, dass** der Sand in der oder den Zonen gespeichert wird, welche als Einleitungszone und/oder als Zwischenzone während der physiko-chemischen Behandlungsphase verwendet wird/werden.

17. Verfahren nach einem der Ansprüche 1 bis 16, **dadurch gekennzeichnet, dass** der Sandstrom, welcher durch die Sandabgabe austritt, einer Trennbehandlung unterzogen wird, um eventuell vorhandene große Partikel oder eventuell vorhandene Fasern abzutrennen.

18. Anlage zur Behandlung eines unbehandelten Abwasserstromes, welcher mit Partikeln und/oder Kolloiden versetzt ist, aufweisend einen Sandabscheider (2) mit einem Zulauf (13), einem Ablauf (3) für das von Sand befreite Wasser, welcher mit einer oder mehreren ersten, zweiten und sogar dritten Behandlungsstufen verbunden ist, Einrichtungen (22) zum Abführen des Sandes sowie einer Sandabgabe (51), **dadurch gekennzeichnet, dass** sie eine physiko-chemische Behandlungsstrecke aufweist, die umfaßt:
- eine stromaufwärts des Sandabscheiders (2) angeordnete erste Zone, die sogenannte Koagulationszone, welche einen mit einer Quelle für Koagulanzmittel verbunden Zulauf sowie Einrichtungen zur Erzeugung turbulenter Strömungen aufweist,
- einen Sandzulauf (64), welcher mit einer Quelle für sortierten Filtersand verbunden ist,
- einen Flockungsmittelzulauf (90), der mit einer Quelle für Flockungsmittel verbunden ist.
- eine zweite Zone, die sogenannte Zwischenzone (14), die mit Einrichtungen zur Erzeugung turbulenter Strömungen ausgestattet ist, welche dazu geeignet sind, den größten Teil des dem Strom beigegebenen Sandes in Suspension zu halten, wobei die Zuläufe für den Sand und die Flockungsmittel in diese oder stromaufwärts dieser Zwischenzone einmünden,
- den mit Einrichtungen (22) zum Abführen des Sandes ausgestatteten Sandabscheider, wobei die Zwischenzone einen mit dem Zulauf des Sandabscheiders in Verbindung stehenden Ablauf hat,
- einen Wasserablauf (3), welcher gegebenenfalls mit dem Ablauf für von Sand befreites Wasser verbunden ist,
- eine Rückführung für Sand, welche die Sandabgabe mit der Quelle für sortierten Sand verbindet.

19. Anlage nach Anspruch 18, **dadurch gekennzeichnet, dass** der wiederverwendete Filtersand eine mittlere Teilchengröße im Bereich von 80 und 350 µm, vorzugsweise zwischen 150 und 250 µm, aufweist.

20. Anlage nach einem der Ansprüche 18 oder 19, **dadurch gekennzeichnet, dass** das Koagulanzmittel stromaufwärts einer Quelle zum Erzeugen turbulenter Strömungen in den Abwasserzulauf eingeleitet wird, wodurch eine schnelle Vermischung des Abwassers mit dem Koagulanzmittel sichergestellt wird.

21. Anlage nach einem der Ansprüche 18 bis 20, **dadurch gekennzeichnet, dass** die Zwischenzone einen Einleitungsbehälter (14), in den der Einleitungszulauf für Sand mündet, sowie einen Reifungsbehälter aufweist, wobei der Zulauf für das Flockungsmittel in den einen und/oder in den anderen Behälter mündet.

22. Anlage nach einem der Ansprüche 18 bis 20, **dadurch gekennzeichnet, dass** das Einleiten des Filtersandes und das Einleiten des Flockungsmittels unmittelbar in einen Reifungsbehälter (15) erfolgt, welcher die Zwischenzone beinhaltet.

23. Anlage nach Anspruch 21 oder 22, **dadurch gekennzeichnet, dass** die Zone für die Koagulation und/oder für das Einleiten des Filtersandes und/oder für das Reifen der Flockungsmittel Umwälzbehälter mit flachem Grund sind.

24. Anlage nach Anspruch 21 oder nach Anspruch 22, **dadurch gekennzeichnet, dass** die Zone für die Koagulation und/oder für das Einleiten des Filtersandes und/oder für das Reifen der Flockungsmittel Umwälzbehälter mit trichterförmigem Grund sind, an die Mittel zum Entleeren und/oder zum Sortieren von Material durch Dekantieren und/oder zum Zurückleiten von Filtersand anschließbar sind.

25. Anlage nach einem der Ansprüche 18 bis 24, **dadurch gekennzeichnet, dass** sie eine Leitung mit direktem Zugang zu dem ungereinigten Strom (11, 12), welche den ungereinigten Strom ohne Durchlaufen der Einleitungszone oder der Zwischenzone durchleitet, sowie Mittel zum Verteilen aufweist, wie Schieber, Absperrungen, Stufen, welche die Verteilung des ungereinigten Stromes entweder durch die Leitung mit direktem Zugang oder durch die Einleitungs- und Zwischenzone ermöglicht.

26. Anlage nach einem der Ansprüche 18 bis 25, **dadurch gekennzeichnet, dass** der Wasserablauf (3) mit den Mitteln zur Wassergewinnung (232, 232) verbunden ist, welche auf zwei verschiedenen Niveaus angeordnet sind und voneinander getrennt und unabhängig voneinander aktiviert werden können, jenachdem, ob man sich in der Entsandungsphase oder der physiko-chemischen Behandlungsphase befindet.

27. Anlage nach einem der Ansprüche 18 bis 26, **dadurch gekennzeichnet, dass** die Dekantierzone zum Entsanden einen Grund in Gestalt V-förmiger Rutschen aufweist, die mit Mitteln zum Wiederaufnehmen des dekantierten Materials durch eine mechanische Pumpen bzw. Pumpen oder durch eine Luftpumpe bzw. Luftpumpen ausgestattet ist, welche auf einer sich drehenden Brücke angeordnet sind.

28. Anlage nach einem der Ansprüche 18 bis 26, **dadurch gekennzeichnet, dass** die Dekantierzone zum Entsanden einen flachen Grund aufweist, welcher mit Mitteln zum Räumen ausgestattet ist, die die dekantierten Materialien einer Wiederaufnahmezone zuführen, welche mit Mitteln zur Wiederaufnahme ausgerüstet ist, die feststehen und/oder auf einer sich drehenden Brücke angeordnet sind, wie eine mechanische Pumpe(n) oder eine Luftpumpe(n).

29. Anlage nach einem der Ansprüche 18 bis 28, **dadurch gekennzeichnet, dass** die Mittel zum Zurückleiten mittel zum Hydrozyklonieren (54, 63) und/oder Sieben und/oder Zentrifugieren und/der zur Fließbetttrennung aufweisen.

30. Anlage nach einem der Ansprüche 18 bis 29, **dadurch gekennzeichnet, dass** der Sandablauf mit einem Anschluss zum Abfördern des Sandes durch ein Hydrozyklotron (54) verbunden ist.

31. Anlage nach Anspruch 30, **dadurch gekennzeichnet, dass** der Ablauf des ersten Hydrozyklotrons an einen zweiten Hydrozyklotron angeschlossen ist, dessen Überlauf mit einer Quelle für sortierten Sand verbunden ist.

32. Anlage nach Anspruch 30, **dadurch gekennzeichnet, dass** der Überlauf des ersten Hydrozyklotrons an einen zweiten Hydrozyklotron angeschlossen ist, dessen Ablauf mit einer Quelle für sortierten Sand verbunden ist.

33. Anlage nach einem der Ansprüche 18 bis 32, **dadurch gekennzeichnet, dass** der Rückhaltebehälter für den Sand eine Lagerzone aufweist, die mit einer Umwälzeinrichtung ausgestattet ist.

34. Anlage nach Anspruch 33, **dadurch gekennzeichnet, dass** die Lagerzone mit der Einleitungszone und/oder der Zwischenzone zusammenläuft.

35. Anlage nach einem der Ansprüche 18 bis 34, **dadurch gekennzeichnet, dass** der Behälter für die physiko-chemische Behandlung eine Einrichtung zur Trennung eventuell vorhandener großer Partikel und/oder eventuell vorhandener Fasern, wie ein Sieb, aufweist.

36. Verfahren nach einem der Ansprüche 1 bis 17, **dadurch gekennzeichnet, dass** die bei dem vom Sand befreiten Abwasser durchgeführte Behandlung ein biologisches Verfahren ist.

37. Anlage nach einem der Ansprüche 18 bis 35, **dadurch gekennzeichnet, dass** die Behandlungsstufe(n), welche mit dem Ablauf für von Sand befreitem Wasser verbunden ist bzw. sind, eine biologische Behandlung durchführen.

## Claims

1. Method of treating an untreated flow of waste water loaded with particles and/or with colloids wherein the untreated flow is normally introduced into a plain sedimentation/settling unit (2) during periods referred to as plain sedimentation periods in order to separate out therein a flow treated by plain sedimentation or settling that is evacuated via an outlet channel (3) to treatment stages to apply, to this flow treated by plain sedimentation or settling, a primary, secondary or even tertiary treatment, and sand extracted by extraction means (22) and evacuated via a sand outlet channel (51), **characterized in that**, during other periods known as physical-chemical treatment periods:
- said untreated flow is caused to flow in a first or coagulation area in which a coagulating agent is mixed with said flow in controlled proportions, said coagulation area being maintained turbulent,
- ballast sand and a flocculating agent are introduced into said flow in successive or non-successive injection areas (14, 15),
- the coagulated flow is caused to flow into a second or intermediate area (14) that can include at least one of the injection areas and in which turbulence is produced to maintain the greater part of the ballast sand in suspension while colloids or particles aggregate around said sand,
- the flow with substantially all of the sand and the colloids or particles attaching thereto is caused to flow into the plain sedimentation/settling unit for separation by sedimentation of plain sedimental effluent that is evacuated via an outlet channel (3) and sludge consisting of the sand and these aggregated colloids or particles which are extracted by said extraction means (22) and evacuated via the sand outlet channel (51), and
- the sludge is collected, the ballast sand is separated (54, 63) from it for recycling into the sand injection area and the excess sand and sludge are extracted.

2. Method according to claim 1 **characterized in that** the water outlet channel during physical-chemical treatment periods and the water outlet channel during plain sedimentation periods are one and the same.

3. Method according to either claim 1 or claim 2 **characterized in that** the recycled ballast sand has an average grain size between approximately 80 and 350 µm, preferably between 150 and 250 µm.

4. Method according to any of claims 1 to 3 **characterized in that** the ascensional velocity in the plain sedimentation area is limited to a maximum between 25 and 75 m³/h/m² during periods of plain sedimentation and to a maximum below 200 m³/h/m² during physical-chemical treatment periods.

5. Method according to any of claims 1 to 4 **characterized in that** the velocity gradient in the intermediate area is between 70 and 450 s⁻¹, preferably between 150 and 250 s⁻¹.

6. Method according to any of claims 1 to 5 **characterized in that** the coagulating agent is injected into the untreated waste water inlet channel (11) on the upstream side of a source of turbulence achieving rapid mixing of the untreated waste water and the coagulant.

7. Method according to any of claims 1 to 6 **characterized in that** the flow of coagulated but otherwise untreated waste water is first injected with ballast sand in an injection tank and then enters a maturation tank that includes the intermediate area, the flocculating agent being injected into one or both of these two tanks.

8. Method according to any of claims 1 to 6 **characterized in that** the ballast sand and the flocculating agent are injected directly into a maturation tank in the intermediate area.

9. Method according to any of claims 1 to 8 **characterized in that** during plain sedimentation periods the untreated waste water arrives directly in the plain sedimentation area without passing through the injection area or the intermediate area.

10. Method according to claim 9 **characterized in that** the waste water is removed at the outlet from the plain sedimentation area at two different levels (231, 232) that can be isolated or activated separately according to whether the period is one of plain sedimentation or one of physical-chemical treatment, the outlet level (231) of decanted water in physical-chemical treatment periods being higher than that in plain sedimentation periods.

11. Method according to any of claims 1 to 10 **characterized in that** during physical-chemical treatment periods the sludge and organic material, the recycled ballast sand and the excess sand are separated by hydrocycloning and/or screening and/or centrifuging and/or fluidized bed separation means.

12. Method according to any of claims 1 to 11 **characterized in that** the effluent loaded with sand extracted via the sand outlet channel is treated by common hydrocycloning means in all periods.

13. Method according to claim 12 **characterized in that** during physical-chemical treatment periods a heavy sandy effluent is removed from the bottom of a first hydrocyclone (54) and subjected to a second stage of hydrocycloning (63) to separate the fine sand to be recycled as ballast sand to the injection area from the coarse sand introduced in the untreated flow to be treated.

14. Method according to claim 12 **characterized in that**, during physical-chemical treatment periods, coarse sand is removed from the bottom of this hydrocyclone (54) and sludge and fine sand are removed from its top and subjected to a second stage of hydrocycloning to separate the organic sludge from the ballast sand to be recycled to the injection area.

15. Method according to any of claims 1 to 14 **characterized in that** during plain sedimentation periods the ballast sand is stored in a sand storage area provided with agitator means and is returned into suspension at the start of a physical-chemical treatment period.

16. Method according to claim 15 **characterized in that** the sand is stored in the area(s) used as injection and/or intermediate areas during physical-chemical treatment periods.

17. Method according to any of claims 1 to 16 **characterized in that** the sandy effluent leaving the plain sedimentation/settling unit via the sand outlet channel is separated to remove any large particles or any fibrous materials.

18. Installation for treating an untreated flow of waste water loaded with particles and/or colloids, including a plain sedimentation/settling unit (2) having an entry channel (13), a post plain sedimentation/settling water outlet channel (3) connected to one or more stages of primary, secondary or even tertiary treatment, sand extraction means (22) and a sand outlet channel (51), **characterized in that** it includes a physical-chemical treatment channel including:
- a first or coagulation area on the upstream side of the plain sedimentation/settling unit and including an inlet channel connected to a source of coagulating agent (80) and means for generating turbulence,
- a sand inlet channel (64) connected to a supply of ballasting sand of controlled grain size,
- a flocculant inlet channel (90) connected to a supply of flocculant,
- a second or intermediate area provided with turbulent agitator means to maintain the major part of the sand added to the flow in suspension, the sand and flocculant inlet channels discharging into or on the upstream side of said intermediate area,
- said plain sedimentation/settling unit with said sand extraction means (22), said intermediate area having an outlet communicating with the inlet channel of said plain sedimentation/settling unit,
- a water outlet channel (3), possibly the same as the water outlet channel after plain sedimentation,
- a sand recycling channel connecting the sand outlet channel to the controlled grain size sand supply.

19. Installation according to claim 18 **characterized in that** the recycled ballast sand has a mean grain size between approximately 80 and 350 µm, preferably between 150 and 250 µm.

20. Installation according to either claim 18 or claim 19 **characterized in that** the coagulating agent is injected into the untreated waste water inlet channel on the upstream side of a source of turbulence achieving rapid mixing of the untreated waste water and the coagulant.

21. Installation according to any of claims 18 to 20 **characterized in that** the intermediate area includes an injection tank (14) into which the sand injection channel discharges, followed by a maturation tank, the flocculant inlet channel discharging into one or both of said two tanks.

22. Installation according to any of claims 18 to 20 **characterized in that** the ballast sand and the flocculating agent are injected directly into a maturation tank (15) in the intermediate area.

23. Installation according to either claim 21 or claim 22 **characterized in that** the coagulation and/or ballast sand injection and/or floc maturation areas are flat bottomed tanks provided with agitators.

24. Installation according to either claim 21 or claim 22 **characterized in that** the coagulation and/or ballast sand injection and/or floc maturation areas are tanks having bottoms in the form of hoppers and provided with agitators and with the facility for addition thereto of drain and/or sorting means for the materials settling out therein and/or means for recycling the ballast sand.

25. Installation according to any of claims 18 to 24 **characterized in that** it includes a direct untreated waste water inlet line (11, 12) bypassing the injection area and the intermediate area, distribution means (such as valves, coffer dams, sills) distributing the untreated flow either to said direct inlet line or to the injection and intermediate areas.

26. Installation according to any of claims 18 to 25 **characterized in that** the water outlet channel (3) is connected to water extraction means (231, 232) at two different levels adapted to be isolated or activated separately according to whether the period is one of plain sedimentation or one of physical-chemical treatment.

27. Installation according to any of claims 18 to 26 **characterized in that** the sedimentation area includes a bottom with V-shaped channels equipped with means of recovering settled materials by pump or air lift means on a travelling bridge.

28. Installation according to any of claims 18 to 26 **characterized in that** the sedimentation area includes a flat bottom equipped with means for scraping settled materials into a recovery area equipped with recovery means that are fixed and/or on a travelling bridge, such as mechanical pump or air lift means.

29. Installation according to any of claims 18 to 28 **characterized in that** the recycling channel includes hydrocycloning means (54, 63) and/or screening means and/or centrifuging means and/or fluidized bed separating means.

30. Installation according to any of claims 18 to 29 **characterized in that** the sand outlet channel is connected to a sand evacuation channel via a hydrocyclone (54).

31. Installation according to claim 30 **characterized in that** the bottom outlet of the hydrocyclone is connected to a second hydrocyclone the top outlet of which is connected to the closely controlled grain size sand supply.

32. Installation according to claim 30 **characterized in that** the top outlet of the hydrocyclone is connected to a second hydrocyclone the bottom outlet of which is connected to the closely controlled sand supply.

33. Installation according to any one of claims 18 to 32 **characterized in that** the sand recycling channel includes a sand storage area provided with agitator means.

34. Installation according to claim 33 **characterized in that** the sand storage area is coincident with the injection area and/or the intermediate area.

35. Installation according to any of claims 18 to 34 **characterized in that** the physical-chemical treatment channel includes a unit for separating large particles and/or fibrous material, for example a screen.

36. Method according to any of claims 1 to 17, **characterized in that** the treatment applied to the plain sedimented water is a biological process.

37. Installation according to any of claims 18 to 35, **characterized in that** the treatment stage(s) to which the plain sedimented water outlet passage is connected is/are adapted to apply a biological treatment.
